(19) Europäisches Patentamt
European Patent Office
Office européen des brevets

(11) **EP 4 206 126 A1**

(12) **EUROPEAN PATENT APPLICATION**
published in accordance with Art. 153(4) EPC

(43) Date of publication:
**05.07.2023 Bulletin 2023/27**

(21) Application number: **21861113.5**

(22) Date of filing: **29.07.2021**

(51) International Patent Classification (IPC):
**C01B 32/174** (2017.01) **B01J 23/745** (2006.01)
**B82Y 30/00** (2011.01) **B82Y 40/00** (2011.01)
**C01B 32/159** (2017.01)

(52) Cooperative Patent Classification (CPC):
**B01J 23/745; B82Y 30/00; B82Y 40/00;
C01B 32/159; C01B 32/174**

(86) International application number:
**PCT/JP2021/028162**

(87) International publication number:
**WO 2022/044685 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2020 JP 2020145032**

(71) Applicant: **Zeon Corporation
Tokyo 100-8246 (JP)**

(72) Inventor: **TAKAI, Hirokazu
Tokyo 100-8246 (JP)**

(74) Representative: **Maiwald GmbH
Elisenhof
Elisenstraße 3
80335 München (DE)**

(54) **OXIDIZED CARBON NANOTUBES AND PRODUCTION METHOD THEREFOR**

(57) Provided is a technique related to oxidized CNTs having excellent dispersion stability and dispersibility in water. The oxidized CNTs include oxidized single-walled CNTs, have a ratio of the oxidized single-walled CNTs relative to the total number of oxidized CNTs of more than 50%, and have a D' band in a Raman spectrum.

EP 4 206 126 A1

**Description**

TECHNICAL FIELD

The present disclosure relates to oxidized carbon nanotubes and a method of producing these oxidized carbon nanotubes.

BACKGROUND

Carbon nanotubes (hereinafter, also referred to as "CNTs") have various excellent characteristics such as mechanical strength, optical characteristics, electrical characteristics, thermal characteristics, and molecular adsorption capacity, and the development thereof as functional materials such as electronic device materials, optical element materials, and conductive materials is anticipated.

On the other hand, from a viewpoint of causing CNTs to sufficiently display these characteristics, it is necessary to cause uniform dispersion of CNTs in water during use thereof. However, CNTs have a high tendency to aggregate and become entangled with one another and are extremely difficult to uniformly disperse.

In recent years, there has been ongoing development of techniques for improving the dispersibility of CNTs. As one example, Patent Literature (PTL) 1 proposes a fibrous carbon nanostructure dispersion liquid that contains a solvent and fibrous carbon nanostructures, such as CNTs, having at least one absorption peak in a wavenumber region of not less than 500 $cm^{-1}$ and not more than 600 $cm^{-1}$ in a light absorption spectrum.

CITATION LIST

Patent Literature

PTL 1: WO2018/180901A1

SUMMARY

(Technical Problem)

However, there is room for further improvement of the fibrous carbon nanostructure dispersion liquid described in PTL 1 in terms of improving dispersion stability and dispersibility in water.

Accordingly, one object of the present disclosure is to provide oxidized carbon nanotubes having excellent dispersion stability and dispersibility in water.

Another object of the present disclosure is to provide a method of producing oxidized carbon nanotubes having excellent dispersion stability and dispersibility in water.

(Solution to Problem)

The inventor conducted diligent investigation with the aim of solving the problem set forth above. The inventor made a new discovery that in the case of oxidized CNTs that include oxidized single-walled CNTs in a specific ratio and that have a specific property, these oxidized CNTs have excellent dispersion stability and dispersibility in water, and, in this manner, the inventor completed the present disclosure.

Specifically, the present disclosure aims to advantageously solve the problem set forth above, and presently disclosed oxidized carbon nanotubes comprise oxidized single-walled carbon nanotubes, wherein a ratio of a number of the oxidized single-walled carbon nanotubes relative to a total number of the oxidized carbon nanotubes is more than 50%, and the oxidized carbon nanotubes have a D' band in a Raman spectrum. Oxidized CNTs that include oxidized single-walled CNTs in a specific ratio and that have a D' band in a Raman spectrum in this manner have excellent dispersion stability and dispersibility in water.

Note that the term "oxidized CNTs" as used in the present disclosure refers to CNTs having an oxygen atom ratio of more than 4 at%. The oxygen atom ratio of oxidized CNTs can be determined by a method described in the EXAMPLES section of the present specification.

Also note that the "ratio of the number of oxidized single-walled CNTs relative to the total number of oxidized CNTs" referred to in the present disclosure can be determined by a method described in the EXAMPLES section of the present specification.

Furthermore, the presence or absence of a "D' band" referred to in the present disclosure can be judged by a method described in the EXAMPLES section of the present specification.

For the presently disclosed oxidized carbon nanotubes, it is preferable that the oxidized carbon nanotubes have an average diameter of not less than 3.5 nm and not more than 5 nm. When the average diameter of the oxidized CNTs is not less than 3.5 nm and not more than 5 nm, electrostatic repulsion between the oxidized CNTs can be increased, and dispersibility of the oxidized CNTs can be increased.

Note that the "average diameter of oxidized CNTs" referred to in the present disclosure can be determined by a method described in the EXAMPLES section of the present specification.

For the presently disclosed oxidized carbon nanotubes, it is preferable that the oxidized carbon nanotubes have an oxygen atom ratio of 15 at% or more. When the oxygen atom ratio of the oxidized CNTs is 15 at% or more, dispersibility can be increased due to increased electrostatic repulsion between the oxidized CNTs.

For the presently disclosed oxidized carbon nanotubes, it is preferable that the oxidized carbon nanotubes have an average length of not less than 30 nm and not more than 120 nm. When the average length of the oxidized CNTs is not less than 30 nm and not more than 120 nm, the dispersibility in water of the oxidized CNTs can be further increased.

Note that the "average length of oxidized CNTs" referred to in the present disclosure can be determined by a method described in the EXAMPLES section of the present specification.

Moreover, the present disclosure aims to advantageously solve the problem set forth above, and a presently disclosed method of producing oxidized carbon nanotubes is a method of producing the oxidized carbon nanotubes set forth above, comprising an oxidation treatment step of performing oxidation treatment of carbon nanotubes including single-walled carbon nanotubes, wherein the carbon nanotubes have a BET specific surface area of more than 1,300 $m^2/g$. By performing oxidation treatment of CNTs that include single-walled CNTs and that have a BET specific surface area of more than 1,300 $m^2/g$ in this manner, a plurality of edge parts are formed at the surfaces of the CNTs, and these edge parts serve as starting points for severing of the CNTs, thereby enabling efficient production of oxidized CNTs.

Note that the "BET specific surface area" referred to in the present disclosure is the nitrogen adsorption specific surface area measured by the BET method.

In the presently disclosed method of producing oxidized carbon nanotubes, the carbon nanotubes preferably have a G/D ratio of more than 3.0 and less than 10. By using CNTs having a G/D ratio of more than 3.0 and less than 10, it is possible to improve the dispersibility of oxidized CNTs that are obtained.

Note that the "G/D ratio" referred to in the present disclosure is the ratio of G band peak intensity relative to D band peak intensity according to a Raman spectrum. The "G/D ratio" can be determined by a method described in the EXAMPLES section of the present specification.

In the presently disclosed method of producing oxidized carbon nanotubes, the oxidation treatment is preferably performed using nitric acid aqueous solution having a concentration of higher than 40 mass% in the oxidation treatment step. By performing the oxidation treatment of the CNTs using nitric acid aqueous solution having a concentration of higher than 40 mass%, it is possible to further improve the dispersibility and dispersion stability of oxidized CNTs that are obtained because the number of edge parts formed at the surfaces of the CNTs increases, thereby enabling shorter severing of the CNTs.

In the presently disclosed method of producing oxidized carbon nanotubes, a mixture containing the carbon nanotubes and the nitric acid aqueous solution is preferably refluxed at a temperature that is ± 5°C relative to an azeotropic point of the nitric acid aqueous solution in the oxidation treatment step. By refluxing a mixture containing the CNTs and the nitric acid aqueous solution at a temperature that is ± 5°C relative to an azeotropic point of the nitric acid aqueous solution, it is possible to cause sufficient progression of oxidation treatment and to further increase production efficiency of oxidized CNTs.

In the presently disclosed method of producing oxidized CNTs, the oxidation treatment of the carbon nanotubes in the oxidation treatment step is preferably performed such that a single-walled ratio change rate expressed by formula (1), shown below, is 90% or less.

$$\text{Single-walled ratio change rate} = \text{SGCNT}_A/\text{SGCNT}_B \times 100(\%) \cdots (1)$$

In formula (1), $\text{SGCNT}_A$ represents a ratio of the number of oxidized single-walled carbon nanotubes relative to the total number of oxidized carbon nanotubes, and $\text{SGCNT}_B$ represents a ratio of the number of single-walled carbon nanotubes relative to the total number of carbon nanotubes.

By performing the oxidation treatment such that the single-walled ratio change rate is 90% or less in this manner, it is possible to further increase the dispersion stability and dispersibility in water of oxidized CNTs that are obtained.

Note that the "ratio of the number of single-walled CNTs relative to the total number of CNTs" referred to in the present disclosure can be determined by a method described in the EXAMPLES section of the present specification.

In the presently disclosed method of producing carbon nanotubes, the oxidation treatment of the carbon nanotubes in the oxidation treatment step is preferably performed such that an average diameter change rate expressed by formula (2), shown below, is more than 100%.

$$\text{Average diameter change rate} = \text{CNT}_{DA}/\text{CNT}_{DB} \times 100(\%) \cdots (2)$$

In formula (2), $\text{CNT}_{DA}$ represents the average diameter of oxidized carbon nanotubes, and $\text{CNT}_{DB}$ represents the average diameter of carbon nanotubes.

By performing the oxidation treatment such that the average diameter change rate is more than 100% in this manner, it is possible to even further increase the dispersion stability and dispersibility in water of oxidized CNTs that are obtained.

Note that the "average diameter of CNTs" referred to in the present disclosure can be determined by a method described in the EXAMPLES section of the present specification.

(Advantageous Effect)

According to the present disclosure, it is possible to provide oxidized carbon nanotubes having excellent dispersion stability and dispersibility in water.

Moreover, according to the present disclosure, it is possible to provide a method of producing oxidized carbon nanotubes having excellent dispersion stability and dispersibility in water.

DETAILED DESCRIPTION

The following provides a detailed description of embodiments of the present disclosure.

The presently disclosed oxidized CNTs can be used as a constituent element of an electronic product in a production process of an electronic product such as an electronic component (for example, an electronic circuit such as a logic circuit, memory such as DRAM, SRAM, or NRAM, a semiconductor device, an interconnect, a complementary MOS, or a bipolar transistor); a chemical sensor (detector, etc.) for a trace gas or the like; a biosensor (measurement instrument, etc.) for DNA, protein, or the like; or a conductive film for a solar cell, touch panel, or the like, for example, without any specific limitations. Moreover, the presently disclosed oxidized CNTs can be efficiently produced by the presently disclosed method of producing oxidized CNTs.

(Oxidized CNTs)

The presently disclosed oxidized CNTs are required to include oxidized single-walled CNTs in a specific ratio and have a D' band.

<Ratio of number of oxidized single-walled CNTs relative to total number of oxidized CNTs>

For the presently disclosed oxidized CNTs, the ratio of the number of oxidized single-walled CNTs relative to the total number of oxidized CNTs is required to be more than 50%, is more preferably more than 60%, and is preferably less than 85%, more preferably less than 80%, and even more preferably less than 70%. When the ratio of the number of oxidized single-walled CNTs relative to the total number of oxidized CNTs is more than 50%, this can inhibit loss of features of the oxidized single-walled CNTs such as electrical conductivity, thermal conductivity, and strength. On the other hand, when the ratio of the number of oxidized single-walled CNTs relative to the total number of oxidized CNTs is less than 85 mass%, the dispersion stability and dispersibility in water of the oxidized CNTs improve.

<D' band>

A D' band is a Raman spectrum that is observed around 1620 cm$^{-1}$ in Raman spectroscopy. It is thought that since the presently disclosed oxidized CNTs have a D' band, the oxidized CNTs have a plurality of oxidized edge parts. Moreover, it is thought that as a result of electrostatic repulsion due to such edge parts acting between the oxidized CNTs and as a result of edge parts serving as starting points for severing of CNTs and thereby shortening the CNTs, the presently disclosed oxidized CNTs have a low tendency to aggregate and have excellent dispersion stability and dispersibility in water.

<Average diameter of oxidized CNTs>

The average diameter of the presently disclosed oxidized CNTs is preferably 3.5 nm or more, and more preferably 3.7 nm or more, and is preferably 5 nm or less, and more preferably 4 nm or less. When the average diameter of the oxidized CNTs is not less than 3.5 nm and not more than 5 nm, electrostatic repulsion acting between the oxidized CNTs can be increased, and the dispersibility of the oxidized CNTs can be increased.

<Oxygen atom ratio of oxidized CNTs>

The oxygen atom ratio of the presently disclosed oxidized CNTs is preferably 15 at% or more, and is preferably 30 at% or less, and more preferably 20 at% or less. When the oxygen atom ratio of the oxidized CNTs is 15 at% or more, the dispersion stability and dispersibility in water of the oxidized CNTs can be further increased. On the other hand, when the oxygen atom ratio of the oxidized CNTs is 30 at% or less, this can inhibit loss of features of the CNTs such as electrical conductivity, thermal conductivity, and strength.

<Average length of oxidized CNTs>

The average length of the presently disclosed oxidized CNTs is preferably 30 nm or more, and more preferably 400 nm or more, and is preferably 120 nm or less, and preferably 90 nm or less. When the average length of the oxidized CNTs is 30 nm or more, this can further inhibit loss of features of the CNTs such as electrical conductivity, thermal conductivity, and strength. On the other hand, when the average length of the oxidized CNTs is 120 nm or less, the dispersibility in water of the oxidized CNTs can be even further increased.

<G/D ratio of oxidized CNTs>

The G/D ratio of the presently disclosed oxidized CNTs is preferably more than 0.6 and not more than 2, and is more preferably 1 or less. When the G/D ratio of the oxidized CNTs is more than 0.6 and not more than 2, the oxidized CNTs have even better dispersibility in water.

<G/D' ratio of oxidized CNTs>

In addition, the G/D' ratio of the presently disclosed oxidized CNTs is preferably not less than 1.0 and not more than 2.0, and is more preferably 1.5 or less. When the G/D' ratio of the oxidized CNTs is not less than 1.0 and not more than 2.0, the oxidized CNTs have even better dispersibility in water.
Note that the "G/D' ratio" referred to in the present disclosure is the ratio of D' band peak intensity relative to G band peak intensity in a Raman spectrum. The "G/D' ratio" can be determined by a method described in the EXAMPLES section of the present specification.
The oxidized CNTs set forth above can be efficiently produced by adopting the presently disclosed method of producing oxidized CNTs described below as the production method thereof.

(Method of producing oxidized CNTs)

The presently disclosed method of producing oxidized CNTs is required to include an oxidation treatment step of performing oxidation treatment of CNTs that include single-walled CNTs, and these CNTs are required to have a BET specific surface area of more than 1,300 $m^2$/g. Note that the CNTs used in the presently disclosed production method do not have a D' band in a Raman spectrum.
Through the presently disclosed method of producing oxidized CNTs, it is possible to produce oxidized CNTs having excellent dispersion stability and dispersibility in water. Although the reason for this is not clear, it is presumed to be as follows.
The oxidation treatment of the CNTs causes functionalization of surfaces of the CNTs and formation of a plurality of oxidized edge parts at the surfaces of the CNTs, and also causes severing of the CNTs with these edge parts as starting points to thereby form oxidized CNTs. It is thought that the interaction between this formation of edge parts and severing of CNTs through oxidation treatment enables efficient production of oxidized CNTs having excellent dispersion stability and dispersibility in water using the presently disclosed production method.

<BET specific surface area of CNTs>

The specific surface area of the CNTs used in the presently disclosed production method is required to be more than 1,300 $m^2$/g, and is preferably more than 1,400 $m^2$/g. By using CNTs having a specific surface area of more than 1,300 $m^2$/g, it is possible to efficiently perform oxidation treatment and to increase production efficiency of oxidized CNTs.
Moreover, from a viewpoint of improving production efficiency of oxidized CNTs, it is more preferable that the CNTs used in the presently disclosed production method have the following properties.

<Ratio of number of single-walled CNTs relative to total number of CNTs>

For the CNTs used in the presently disclosed production method, a ratio of the number of single-walled CNTs relative to the total number of CNTs is preferably more than 80%, and more preferably more than 90%. When the ratio of the number of single-walled CNTs relative to the total number of CNTs is more than 80%, the dispersion stability and dispersibility in water of oxidized CNTs that are obtained improve.

<Average diameter of CNTs>

The average diameter (Av) of the CNTs used in the presently disclosed production method is preferably 2.0 nm or more, and more preferably 2.5 nm or more, and is preferably 3.5 nm or less, and more preferably 3.0 nm or less. When the average diameter (Av) of the CNTs is not less than 2.0 nm and not more than 3.5 nm, oxidized CNTs having even better dispersibility and dispersion stability can be produced.

<Oxygen atom ratio of CNTs>

The oxygen atom ratio of the CNTs used in the presently disclosed production method is normally 2.0 at% or less, and is preferably 1.8 at% or less, and more preferably 1.5 at% or less.

<Average length of CNTs>

The average length of the CNTs used in the presently disclosed production method is preferably 600 $\mu$m or less, more preferably 500 $\mu$m or less, and even more preferably 400 $\mu$m or less at the time of CNT synthesis. When the length of the CNTs at the time of synthesis is 600 $\mu$m or less, oxidized CNTs can be even more efficiently produced.

<G/D ratio of CNTs>

The G/D ratio of the CNTs used in the presently disclosed production method is preferably more than 3.0, and more preferably more than 4.0, and is preferably less than 10, and more preferably 5.0 or less. When the G/D ratio of the CNTs is more than 3.0 and less than 10, oxidized CNTs that are obtained have even better dispersibility in water.

<Aspect ratio of CNTs>

The aspect ratio (length/diameter) of the CNTs used in the presently disclosed production method is preferably more than 10. Note that the aspect ratio of CNTs can be determined by measuring the diameters and lengths of 100 randomly selected CNTs using a transmission electron microscope and then calculating an average value for the ratio of diameter and length (length/diameter).

<t-Plot for CNTs>

The CNTs used in the presently disclosed production method preferably exhibit a convex upward shape in a t-plot obtained from an adsorption isotherm. In particular, it is more preferable that the CNTs have not undergone opening formation treatment and exhibit a convex upward shape in a t-plot. By using CNTs that exhibit a convex upward shape in a t-plot obtained from an adsorption isotherm, it is possible to further increase the dispersibility in water of oxidized CNTs that are obtained.

Typically, adsorption is a phenomenon in which gas molecules are taken onto a solid surface from the gas phase and is categorized as physical adsorption or chemical adsorption depending on the main cause of adsorption. A nitrogen gas adsorption method that is used for obtaining the t-plot utilizes physical adsorption. In general, when the adsorption temperature is kept constant, the number of nitrogen gas molecules that are adsorbed by CNTs increases with increasing pressure. A plot of the relative pressure (ratio of pressure P at adsorption equilibrium and saturated vapor pressure P0) on a horizontal axis and the amount of adsorbed nitrogen gas on a vertical axis is referred to as an "isotherm". The isotherm is referred to as an "adsorption isotherm" in a situation in which the amount of adsorbed nitrogen gas is measured while increasing the pressure and is referred to as a "desorption isotherm" in a situation in which the amount of adsorbed nitrogen gas is measured while decreasing the pressure.

The t-plot is obtained from the adsorption isotherm measured by the nitrogen gas adsorption method by converting the relative pressure to an average thickness t (nm) of an adsorbed layer of nitrogen gas. Specifically, an average adsorbed nitrogen gas layer thickness t corresponding to a given relative pressure is calculated from a known standard isotherm of average adsorbed nitrogen gas layer thickness t plotted against relative pressure P/P0, and the above-described conversion is performed to obtain a t-plot for the CNTs (t-plot method of de Boer et al.).

In a sample having pores at its surface, the growth of the adsorbed layer of nitrogen gas is categorized into the following processes (1) to (3). The gradient of the t-plot changes in accordance with processes (1) to (3).

> (1) A process in which a single molecule adsorption layer of nitrogen molecules is formed over the entire surface
> (2) A process in which a multi-molecule adsorption layer is formed and is accompanied by capillary condensation filling of pores
> (3) A process in which a multi-molecule adsorption layer is formed at a surface that appears to be non-porous due to the pores being filled by nitrogen

In a t-plot having a convex upward shape, the plot is on a straight line passing through the origin in a region in which the average adsorbed nitrogen gas layer thickness t is small, but, as t increases, the plot deviates downward from the straight line. When CNTs have the t-plot shape described above, this indicates that the CNTs have a large ratio of internal specific surface area relative to total specific surface area and that numerous openings are formed in the CNTs. As a result, the CNTs have a lower tendency to aggregate.

A bending point of the t-plot for the CNTs is preferably within a range satisfying $0.2 \leq t$ (nm) $\leq 1.5$, more preferably within a range satisfying $0.45 \leq t$ (nm) $\leq 1.5$, and even more preferably within a range satisfying $0.55 \leq t$ (nm) $\leq 1.0$. When the position of the bending point of the t-plot is within any of the ranges set forth above, characteristics of the CNTs further improve, which makes it possible to further increase the dispersibility in water of oxidized CNTs that are obtained.

The "position of the bending point" is an intersection point of a linear approximation A for process (1) and a linear approximation B for process (3) in the t-plot.

A ratio (S2/S1) of internal specific surface area S2 relative to total specific surface area S1 obtained from the t-plot for the CNTs used in the presently disclosed production method is preferably 0.05 or more, more preferably 0.06 or more, and even more preferably 0.08 or more, and is preferably 0.30 or less. When S2/S1 is not less than 0.05 and not more than 0.30, characteristics of the CNTs can be further enhanced, which makes it possible to further increase the dispersibility in water of oxidized CNTs that are obtained.

Measurement of an adsorption isotherm for CNTs, preparation of a t-plot, and calculation of total specific surface area S1 and internal specific surface area S2 based on t-plot analysis can be performed using a BELSORP®-mini (BELSORP is a registered trademark in Japan, other countries, or both), for example, which is a commercially available measurement instrument produced by Bel Japan Inc.

[$3\sigma$/Av of CNTs]

The CNTs used in the presently disclosed production method are preferably CNTs for which a ratio $3\sigma$/Av of a value $3\sigma$ obtained by multiplying the diameter standard deviation ($\sigma$) by 3 relative to the average diameter (Av) is more than 0.20 and less than 0.80, more preferably CNTs for which $3\sigma$/Av is more than 0.25, even more preferably CNTs for which $3\sigma$/Av is more than 0.40, and particularly preferably CNTs for which $3\sigma$/Av is more than 0.50. By using CNTs for which $3\sigma$/Av is more than 0.20 and less than 0.80, it is possible to further increase the dispersibility in water of oxidized CNTs that are obtained.

Note that the "average diameter (Av) of CNTs" and the "diameter standard deviation ($\sigma$: sample standard deviation) of CNTs" can each be determined by measuring the diameters (external diameters) of 100 randomly selected CNTs using a transmission electron microscope. The average diameter (Av) and the standard deviation ($\sigma$) of the CNTs may be adjusted by altering the synthesis method or synthesis conditions of the CNTs, or may be adjusted by combining a plurality of types of CNTs obtained by different synthesis methods.

[Synthesis method of CNTs]

No specific limitations are placed on the method by which the CNTs used in the presently disclosed production method are synthesized. CNTs having the properties described above can be efficiently produced by, for example, in a method in which during synthesis of CNTs through chemical vapor deposition (CVD) by supplying a feedstock compound and a carrier gas onto a substrate having a catalyst layer for CNT synthesis at the surface thereof, a trace amount of an oxidizing agent (catalyst activating material) is provided in the system to dramatically improve catalytic activity of the catalyst layer (super growth method; refer to WO2006/011655A1), forming the catalyst layer on the substrate surface by a wet process.

Moreover, from a viewpoint of efficiently synthesizing CNTs having a large specific surface area, it is preferable that the CNTs are synthesized by a method in which a substrate having a catalyst layer formed thereon that has been used in CNT synthesis is reused in order to repeatedly synthesize CNTs by CVD (for example, refer to JP2015-188811A). This preferable CNT synthesis method can, for example, include a CNT peeling step of peeling CNTs from a substrate on which the CNTs have been formed, a step (reused substrate production step) of producing a reused substrate using a used substrate that has been obtained by peeling the CNTs from the substrate in the CNT peeling step, a step (catalyst substrate production step) of producing a catalyst substrate for CNT production using the reused substrate that has been obtained, and a CNT growth step of using the catalyst substrate for CNT production that has been obtained to synthesize CNTs on the catalyst substrate for CNT production by CVD. These steps are described below in order.

<CNT peeling step>

In the CNT peeling step, CNTs are peeled from a substrate having the CNTs formed on the surface thereof to thereby obtain a used substrate that has had the CNTs peeled from the surface thereof.
Examples of methods by which the CNTs may be peeled from the substrate in the CNT peeling step include physical, chemical, and mechanical peeling methods. Specifically, it is possible to adopt a method of peeling using an electric field, magnetic field, centrifugal force, surface tension, or the like, a method of mechanical stripping directly from the substrate, a method of peeling from the substrate using pressure or heat, or the like, for example. The CNTs can also be sucked using a vacuum pump so as to strip the CNTs from the substrate. Note that examples of methods that enable simple peeling of the CNTs while having a low tendency to damage the CNTs include a method in which the CNTs are directly pinched and peeled from the substrate using tweezers and a method in which the CNTs are stripped from the substrate using a plastic spatula having a sharp section or a thin blade such as a cutter blade. In particular, a method in which the CNTs are stripped from the substrate using a plastic spatula having a sharp section or a thin blade such as a cutter blade is suitable as the peeling method.

<Reused substrate production step>

The reused substrate production step includes an initialization step of washing the used substrate that has been obtained in the CNT peeling step and may optionally further include a cleaning step of cleaning the used substrate that has undergone the initialization step.

[Used substrate]

The used substrate can, for example, be a used substrate that has been obtained by peeling CNTs from a substrate that has been used to perform CNT synthesis only once. For example, the used substrate may include a substrate, a foundation layer on the substrate, and a catalyst layer on the foundation layer. Impurities such as carbon components that have become attached during CNT synthesis and carbon components that have remained during CNT peeling are present on at least a surface at a catalyst layer-side of the used substrate (i.e., a surface at a side at which CNTs were formed). Specifically, carbon compounds such as CNTs that have remained within being completely collected during CNT peeling, nanoparticles having a graphitic or amorphous form, and flaky substances may remain on the surface of the used substrate. Note that constituents of the used substrate other than impurities (i.e., the substrate, foundation layer, and catalyst layer) are constituents that were used in synthesis of the CNTs that were peeled from the substrate in the CNT peeling step. Accordingly, the catalyst layer, for example, is formed of fine particles of a catalyst for CNT synthesis that have remained without being peeled off during CNT peeling.

-Substrate-

The substrate that constitutes one part of the used substrate that has been used in CNT synthesis may be any substrate so long as it is a substrate that can support a catalyst for CNT synthesis on the surface thereof and that can withstand washing using collisions with a liquid as described further below. More specifically, any substrate that has successfully been used in CNT synthesis can be used as the substrate as appropriate. Note that the substrate can preferably maintain the shape thereof even at a high temperature of 50°C or higher.
Examples of possible materials for the substrate include metals such as iron, nickel, chromium, molybdenum, tungsten, titanium, aluminum, manganese, cobalt, copper, silver, gold, platinum, niobium, tantalum, lead, zinc, gallium, indium, germanium, and antimony; alloys and oxides including any of these metals; non-metals such as silicon, quartz, glass, mica, graphite, and diamond; and ceramics. Of these materials, metals are preferable due to having low cost and being easy to process compared to silicon and ceramics, and Fe-Cr (iron-chromium) alloy, Fe-Ni (iron-nickel) alloy, Fe-Cr-Ni (iron-chromium-nickel) alloy, and the like, in particular, are suitable.
Although the shape of the substrate may be a flat plate shape, a thin film shape, a block shape, or a particulate shape, a flat plate shape and a particulate shape are particularly advantageous from a viewpoint of synthesizing a large quantity of CNTs.

-Foundation layer-

The foundation layer is also referred to as a "catalyst-supporting layer" and is a layer that serves as a foundation of a catalyst for CNT synthesis. Various materials can be used as the material of the foundation layer so long as they can serve as a foundation of a catalyst for CNT synthesis. For example, a ceramic material such as alumina, titania, titanium nitride, or silicon oxide may suitably be used. Of these materials, ceramic materials are preferable as the material of the foundation layer. This is because a ceramic material enables better growth of CNTs when the substrate is reused to synthesize CNTs.

The thickness of the foundation layer is preferably 10 nm or more from a viewpoint that CNT growth stabilizes and yield improves, and is preferably 50 nm or less from a viewpoint of production efficiency.

-Catalyst layer-

The catalyst layer is a layer that contains fine particles of a catalyst for CNT synthesis. Any catalyst that has successfully been used in CNT synthesis can, for example, be used as appropriate as the catalyst for CNT synthesis that is a constituent of the catalyst layer. More specifically, examples of catalysts for CNT synthesis that may be used include iron, nickel, cobalt, and molybdenum, and chlorides and alloys thereof.

The amount of the catalyst for CNT synthesis that is used to form the catalyst layer can, for example, be any amount that has been successfully used in CNT synthesis. More specifically, in a case in which iron is used as the catalyst for CNT synthesis, for example, the thickness of the catalyst layer is preferably not less than 0.1 nm and not more than 100 nm, more preferably not less than 0.5 nm and not more than 5 nm, and particularly preferably not less than 0.8 nm and not more than 2 nm.

Examples of combinations of a foundation layer and a catalyst layer such as described above include an alumina-iron thin film, an alumina-cobalt thin film, an alumina-iron-molybdenum thin film, and so forth.

[Initialization step]

In the initialization step, the used substrate from which CNTs have been peeled is subjected to washing using collisions with a liquid. More specifically, among surfaces of the used substrate, at least a surface at the side where the CNTs have been peeled off is subjected to washing using collisions with a liquid in the initialization step. In the initialization step, impurities such as carbon components that remain on the surface of the used substrate are removed by washing using collisions with a liquid.

Note that the foundation layer and the catalyst layer may remain on the substrate after the initialization step. Alternatively, the foundation layer and the catalyst layer of the used substrate may be removed in accompaniment to removal of carbon components by washing using collisions with a liquid. Also note that even in a case in which the foundation layer and the catalyst layer are removed in the initialization step, subsequent production of CNTs is not adversely affected so long as a foundation layer and a catalyst layer are formed once again in a foundation layer formation step and catalyst layer formation step described further below. On the other hand, in a situation in which there is insufficient removal of carbon components in the initialization step, reduction of production quantity and quality of CNTs may arise in subsequent production of CNTs even when a foundation layer and a catalyst layer are formed over the carbon components.

The "washing using collisions with a liquid" referred to herein is a method in which a liquid is caused to collide with a surface of the used substrate that is a washing subject and in which the surface of the used substrate is physically washed using a localized high-pressure site, shear flow, vibration of the washing subject, etc. arising upon collision with the liquid.

Moreover, the washing method using collisions with a liquid may, for example, be ultrasonic washing.

-Ultrasonic washing-

In a case in which the used substrate is washed by ultrasonic washing, the used substrate may be immersed in a liquid such as water and may then be irradiated with ultrasound so as to cause the liquid to vibrate and collide with the used substrate, for example. Washing of the surface of the used substrate is performed using cavitation, shear flow, vibration of the used substrate, etc. caused by irradiation with ultrasound.

Note that the ultrasonic washing can be performed using a known ultrasonic washing device such as an ultrasonic washing tank.

The ultrasonic washing of the used substrate is preferably performed at a frequency of not lower than 20 kHz and not higher than 5 MHz, is more preferably performed at a frequency of not lower than 20 kHz and not higher than 1 MHz, and is even more preferably performed at a frequency of not lower than 20 kHz and not higher than 200 kHz. In such a frequency band, it is possible to generate a suitable degree of cavitation and to perform efficient washing. The time for which the ultrasonic washing is performed is preferably not less than 0.1 minutes and not more than 10 minutes. Moreover, the temperature at which the ultrasonic washing is performed is preferably not lower than 20°C and not higher than 50°C. This is because degradation of the used substrate may occur during washing when the frequency is too high, the washing time is too long, or the temperature is too high. Conversely, sufficient removal of impurities such as carbon components may not be possible when the frequency is too low, the washing time is too short, or the temperature is too low.

[Cleaning step]

In the cleaning step, the substrate that has undergone the initialization step is cleaned to obtain a reused substrate that has had impurities such as carbon components removed from the used substrate. Cleaning of the substrate in the cleaning step is performed by a different method to the washing method used in the initialization step. For example, a method in which the substrate surface is water washed and then wiped with a cloth, a method in which the substrate surface is water washed and then dried by air blowing, or the like may be adopted. There are instances in which impurities such as carbon components remain on the substrate surface without being completely removed after washing using collisions with a liquid, but by cleaning the substrate after the initialization step, it is possible to sufficiently remove remaining impurities such as carbon components. Note that adhesive strength between the substrate and carbon components and the like remaining on the substrate surface is reduced by the washing using collisions with a liquid in the initialization step. Consequently, carbon components, etc. can easily be removed by water washing, wiping, or the like in the cleaning step.

The foundation layer and the catalyst layer may remain on the substrate after the cleaning step. Alternatively, the foundation layer and the catalyst layer may be removed in accompaniment to cleaning of the substrate surface. Note that even in a case in which the foundation layer and the catalyst layer are removed in the cleaning step, subsequent production of CNTs is not adversely affected so long as a foundation layer and a catalyst layer are formed in the subsequently described foundation layer formation step and catalyst layer formation step.

[Reused substrate]

The reused substrate that is obtained by performing the initialization step and the optional cleaning step with respect to the used substrate in the reused substrate production step described above has a configuration in which impurities such as carbon components have been removed from the used substrate.

Carbon components and the like have been removed from the surface of this reused substrate in the previously described initialization step and cleaning step. Therefore, the reused substrate can be used to synthesize CNTs once again after a foundation layer and a catalyst layer are formed thereon to obtain a catalyst substrate for CNT production in the catalyst substrate production step described in detail further below. In other words, the reused substrate can be used as a raw material substrate in production of a catalyst substrate for CNT production in the catalyst substrate production step described in detail further below.

Note that when a reused substrate is used once again for CNT synthesis, CNT growth may become unstable or the quality of produced CNTs may decrease in a situation in which the reused substrate contains impurities such as carbon components. However, since carbon components and the like are sufficiently removed by the previously described initialization step and cleaning step in production of the reused substrate, CNT growth can be stabilized and high quality CNTs can be repeatedly produced using the reused substrate.

A method in which heating is performed at high temperature to cause evaporation or ashing, a method in which acid washing is performed, and so forth may also be considered as methods for removing carbon components and the like that are attached to a substrate. However, heating of a substrate at high temperature may cause problems such as damage of the substrate and warping of the substrate, and thus may adversely affect CNT growth when the substrate is reused. Moreover, acid washing of a substrate may cause corrosion of the substrate, particularly in a case in which the substrate is formed of a metal material, and may adversely affect CNT growth when the substrate is reused.

In contrast, since carbon components and the like are removed by washing using collisions with a liquid such as water in the previously described initialization step, degradation (for example, damage, warping, or corrosion) of the substrate during washing can be inhibited. Therefore, CNT growth can be stabilized and high quality CNTs can be repeatedly produced using the reused substrate.

-Properties of reused substrate-

As described above, it is preferable that carbon components and the like have been sufficiently removed from the reused substrate, and particularly preferable that carbon components and the like do not remain on the surface of the reused substrate. The removal of carbon components from the reused substrate can be evaluated through Raman spectrum measurement of the substrate surface, for example. In a Raman spectrum, carbon components can be detected as a vibration mode of graphite at around 1593 cm$^{-1}$ and a vibration mode of amorphous carbon compounds having low crystallinity at around 1350 cm$^{-1}$. Accordingly, it is preferable that these peaks are not observed for the reused substrate.

The contact angle with water of the surface (surface at the catalyst layer-side) of the reused substrate is preferably 70° or less, and more preferably 65° or less. This is because when the surface of the reused substrate has a large contact angle, this may adversely affect CNT growth during reuse of the reused substrate in CNT synthesis.

Note that the contact angle can be calculated by the 0/2 method from a droplet that is present 5 seconds after 2 microliters of pure water is dripped onto the surface at the catalyst layer-side of the reused substrate.

<Catalyst substrate production step>

The catalyst substrate production step includes at least a catalyst layer formation step of mounting a catalyst for CNT synthesis on the surface of the reused substrate obtained in the reused substrate production step so as to form a catalyst layer on the reused substrate. The catalyst substrate production step may optionally include a foundation layer formation step of forming a foundation layer that serves as a foundation of the catalyst for CNT synthesis on the surface of the reused substrate before the catalyst layer formation step.

In a situation in which a reused substrate is to be used in CNT synthesis, a reused substrate having a catalyst layer at an outmost surface thereof may be used in that form to perform CNT synthesis for a second time. However, when a reused substrate is used in that form, CNT growth may become unstable and the quality of produced CNTs may decrease. Possible causes of this are that the density or diameter of catalyst fine particles in the catalyst layer may be in a different state to during synthesis of CNTs for the first time and that catalyst fine particles in the catalyst layer may have been removed in the initialization step and the cleaning step.

For this reason, a catalyst for CNT synthesis is mounted on the surface of the reused substrate once again in the catalyst substrate production step so as to once again form a catalyst layer on the reused substrate. Note that by forming a foundation layer on the reused substrate before once again forming a catalyst layer, it is possible to separate the catalyst layer that has been used and the catalyst layer that is to be used in the next synthesis of CNTs through the foundation layer and to achieve good catalyst layer formation. Therefore, it is preferable that a foundation layer formation step is performed in the catalyst substrate production step.

[Foundation layer formation step]

Formation of a foundation layer on a catalyst layer of the reused substrate can be performed using either a wet process or a dry process (sputtering deposition, etc.). However, a wet process is preferable in terms of simplicity of film formation equipment, throughput speed, and low cost of raw materials.

The following describes, as one example, a case in which the foundation layer is formed by a wet process.

The wet process for forming the foundation layer includes a step of applying, onto the substrate, a coating liquid A having an organometallic compound and/or metal salt that includes a constituent element of the foundation layer dissolved in an organic solvent and a step of subsequently performing heating.

In a case in which an alumina film is used as the foundation layer, for example, the organometallic compound and/or metal salt for forming the alumina film may be an aluminum alkoxide such as aluminum trimethoxide, aluminum triethoxide, aluminum tri-n-propoxide, aluminum tri-i-propoxide, aluminum tri-n-butoxide, aluminum tri-sec-butoxide, or aluminum tri-tert-butoxide. Other examples of organometallic compounds that may be used to form the alumina film include complexes such as aluminum(III) tris(acetylacetonate). Examples of the metal salt include aluminum sulfate, aluminum chloride, aluminum nitrate, aluminum bromide, aluminum iodide, aluminum lactate, basic aluminum chloride, and basic aluminum nitrate. Of these examples, an aluminum alkoxide is preferably used. One of these examples may be used individually, or two or more of these examples may be used as a mixture.

Although various organic solvents such as alcohols, glycols, ketones, ethers, esters, and hydrocarbons can be used, the organic solvent is preferably an alcohol or a glycol in order to enable favorable organometallic compound and metal salt solubility. One of these organic solvents may be used individually, or two or more of these organic solvents may be used as a mixture. Examples of alcohols that are preferable in terms of handleability and preservation stability include methanol, ethanol, and 2-propanol (isopropyl alcohol).

The application method of the coating liquid A may be a method of application by spraying, brush coating, or the like, or may be a method such as spin coating or dip coating, but is preferably dip coating from a viewpoint of productivity and film thickness control.

Heating after application of the coating liquid A can be performed in a temperature range of not lower than 50°C and not higher than 400°C for a time of not less than 5 minutes and not more than 3 hours in accordance with the type of foundation layer. The heating initiates hydrolysis and condensation polymerization reaction of the applied organometallic compound and/or metal salt, thereby forming a hardened film (foundation layer) containing a metal hydroxide and/or metal oxide on the surface of the reused substrate.

[Catalyst layer formation step]

Formation of a catalyst layer may be performed by either a wet process or a dry process (sputtering deposition, etc.) in the same manner as for the foundation layer. However, a wet process is preferable in terms of simplicity of film formation equipment, throughput speed, and low cost of raw materials.

The following describes, as one example, a case in which the catalyst layer is formed by a wet process.

The wet process for forming the catalyst layer includes a step of applying, onto the substrate, a coating liquid B having an organometallic compound and/or metal salt that includes a constituent element of the catalyst for CNT synthesis dissolved in an organic solvent and a step of subsequently performing heating.

In a case in which iron is used as the catalyst for CNT synthesis, for example, the organometallic compound and/or metal salt for forming an iron thin film serving as a catalyst layer may be iron pentacarbonyl, ferrocene, iron(II) acetylacetonate, iron(III) acetylacetonate, iron(II) trifluoroacetylacetonate, iron(III) trifluoroacetylacetonate, or the like. Examples of the metal salt include inorganic acid iron salts such as iron sulfate, iron nitrate, iron phosphate, iron chloride, and iron bromide, and organic acid iron salts such as iron acetate, iron oxalate, iron citrate, and iron lactate. Of these examples, an organic acid iron salt is preferably used. One of these examples may be used individually, or two or more of these examples may be used as a mixture.

The organic solvent of the coating liquid B may be any of the same organic solvents as for the previously described coating liquid A. The contents thereof may also be the same amounts as for the coating liquid A.

Furthermore, the application method of the coating liquid B may be any of the same methods as for the coating liquid A. Heating after application of the coating liquid B can also be performed in the same manner as for the coating liquid A.

Through this catalyst layer formation step, a catalyst substrate for CNT production having a catalyst layer formed on the surface of the reused substrate is formed.

[Catalyst substrate for CNT production]

The catalyst substrate for CNT production that is obtained by performing the foundation layer formation step and the catalyst layer formation step with respect to the reused substrate in the catalyst substrate production step described above may, for example, have a configuration in which a new foundation layer and a new catalyst layer are sequentially stacked at the catalyst layer-side of the reused substrate.

As a result of this catalyst substrate for CNT production having a foundation layer and a catalyst layer newly formed on the reused substrate, the catalyst substrate for CNT production can suitably be used in CNT synthesis in the CNT growth step that is described in detail below.

<CNT growth step>

In the CNT growth step, the catalyst substrate for CNT production that has been obtained in the catalyst substrate production step is used to synthesize CNTs on the catalyst substrate for CNT production by a known method such as CVD. Note that stable synthesis of high quality CNTs is possible in the CNT growth step as a result of the catalyst substrate for CNT production that is used having a foundation layer and a catalyst layer newly formed on the reused substrate.

More specifically, CNTs can be grown on the catalyst substrate for CNT growth in the CNT growth step by performing a formation step of reducing the catalyst for CNT synthesis on the catalyst substrate for CNT growth and a growth step of growing CNTs, but are not specifically limited to being grown in this manner.

[CNT production equipment]

The CNT growth step can, without any specific limitations, be performed using known CNT production equipment including a synthesis furnace (reaction chamber) accommodating the catalyst substrate for CNT production and a heating means. More specifically, known CNT production equipment such as a thermal CVD furnace, a thermal heating furnace, an electric furnace, a drying furnace, a constant-temperature tank, an atmosphere furnace, a gas-switching furnace, a muffle furnace, an oven, a vacuum heating furnace, a plasma reaction furnace, a micro plasma reaction furnace, an RF plasma reaction furnace, an electromagnetic heating reaction furnace, a microwave irradiation reaction furnace, an infrared irradiation heating furnace, an ultraviolet heating reaction furnace, an MBE reaction furnace, an MOCVD reaction furnace, or a laser heating device can be used.

In the CNT growth step, CNTs are synthesized on the catalyst substrate for CNT production to thereby form CNTs on the catalyst substrate for CNT production.

<Oxidation treatment>

In the oxidation treatment step of the presently disclosed production method, CNTs that include single-walled CNTs are subjected to oxidation treatment. The method of oxidation treatment is not specifically limited. For example, the oxidation treatment can be performed by causing the CNTs to come into contact with an acidic solution having a pH of 2 or lower (acid treatment). The method by which the acid is brought into contact with the CNTs is not specifically limited. For example, acid treatment of the CNTs can be performed by adding the CNTs into an acidic solution having a pH of 2 or lower to obtain a mixed liquid. Nitric acid, hydrochloric acid, sulfuric acid, mixed acid, or the like, for example, can be used as the acidic solution without any specific limitations. One of these acids may be used individually, or two or more of these acids may be used in combination. Of these acids, nitric acid is preferably used from a viewpoint of further increasing the dispersibility in water of oxidized CNTs.

The method of mixing by which the mixed liquid is obtained may be by performing a stirring operation by any method. The stirring time when obtaining the mixed liquid is preferably not less than 0.1 hours and not more than 10 hours. Moreover, when refluxing of the mixed liquid is performed, the reflux temperature is preferably not lower than 100°C and not higher than 150°C, and the reflux time is preferably not less than 3 hours and not more than 20 hours. Through the reflux temperature and reflux time being within the ranges set forth above, it is possible to cause sufficient progression of the oxidation treatment and to further increase the dispersion stability and dispersibility in water of oxidized CNTs that are obtained.

The solvent of the acidic solution is not specifically limited and may be water or any organic solvent (for example, an ester, a ketone, or an alcohol). One of these solvents may be used individually, or two or more of these solvents may be used in combination. Of these solvents, water is preferable. From a viewpoint of increasing production efficiency of oxidized CNTs, the oxidation treatment is preferably performed using, as the acidic solution, nitric acid aqueous solution that preferably has a concentration of higher than 40 mass%, more preferably has a concentration of higher than 50 mass%, and even more preferably has a concentration of higher than 60 mass%. Through the above, it is possible to improve the dispersibility and dispersion stability of oxidized CNTs that are obtained because the number of edge parts formed at the surfaces of the CNTs increases, thereby causing shorter severing of the CNTs.

In the presently disclosed production method, it is preferable that a mixture containing the CNTs and the nitric acid aqueous solution is refluxed at a temperature that is at least $\pm 5$°C relative to an azeotropic point of the nitric acid aqueous solution in the oxidation treatment step. Through the above, it is possible to cause sufficient progression of the oxidation treatment and to further increase production efficiency of oxidized CNTs.

[Single-walled ratio change rate]

Moreover, in the presently disclosed production method, it is preferable that oxidation treatment of the CNTs in the oxidation treatment step is performed such that a single-walled ratio change rate expressed by the following formula (1) is 90% or less.

$$\text{Single-walled ratio change rate} = \text{SGCNT}_A / \text{SGCNT}_B \times 100(\%) \cdots (1)$$

In formula (1), $\text{SGCNT}_A$ represents a ratio of the number of oxidized single-walled CNTs relative to the total number of oxidized CNTs, and $\text{SGCNT}_B$ represents a ratio of the number of single-walled CNTs relative to the total number of CNTs. By performing the oxidation treatment such that the single-walled ratio change rate is 90% or less in this manner, it is possible to further increase the dispersion stability and dispersibility in water of oxidized CNTs that are obtained.

[Average diameter change rate]

Furthermore, in the presently disclosed production method, it is preferable that oxidation treatment of the carbon nanotubes in the oxidation treatment step is performed such that an average diameter change rate expressed by the following formula (2) is more than 100%.

$$\text{Average diameter change rate} = \text{CNT}_{DA}/\text{CNT}_{DB} \times 100(\%) \cdots (2)$$

In formula (2), $\text{CNT}_{DA}$ represents the average diameter of oxidized carbon nanotubes, and $\text{CNT}_{DB}$ represents the average diameter of carbon nanotubes. By performing the oxidation treatment such that the average diameter change rate is more than 100% in this manner, it is possible to even further increase the dispersion stability and dispersibility in water of oxidized CNTs that are obtained.

Oxidized CNTs obtained by the presently disclosed production method can, for example, be dispersed in water and then be used as an oxidized CNT water dispersion. The concentration of the oxidized CNTs in the oxidized CNT water dispersion can be adjusted as appropriate without any specific limitations.

EXAMPLES

The following provides a more specific description of the present disclosure based on examples. However, the present disclosure is not limited to the following examples.

In the examples and comparative examples, the following methods were used to measure and evaluate BET specific surface area, G/D ratio, D' band, G/D' ratio, ratio of number of single-walled CNTs relative to total number of CNTs, ratio of oxidized single-walled CNTs relative to total number of oxidized CNTs, average diameter of CNTs and oxidized CNTs, oxygen atom ratio of CNTs and oxidized CNTs, average length of CNTs and oxidized CNTs, single-walled ratio change rate, average diameter change rate, light absorbance ratio, and dispersion stability.

<BET specific surface area>

The BET specific surface area ($m^2/g$) of CNTs was measured in accordance with JIS Z8830 using a BET specific surface area measurement instrument (HM model-1210 produced by Mountech Co., Ltd.).

<G/D ratio>

Raman spectra were measured for CNTs and oxidized CNTs using a microscopic laser Raman spectrophotometer (Nicolet Almega XR produced by Thermo Fisher Scientific).

The intensity of a G band peak observed at around 1590 cm$^{-1}$ and the intensity of a D band peak observed at around 1340 cm$^{-1}$ in each obtained Raman spectrum were determined, and the G/D ratio was calculated.

<D' band and G/D' ratio>

A G band observed at around 1590 cm$^{-1}$ and a D' band observed at around 1620 cm$^{-1}$ in a Raman spectrum for oxidized CNTs were resolved into two Gaussian function-type spectra in order to judge the presence or absence of a D' band for the oxidized CNTs. More specifically, this was performed by the following procedure.

In a Raman spectrum

$Sp(v)$,

a G peak and a D' peak were approximated using Gaussian functions in the following formulae (a)

$$G(v) = g e^{-k(v-v_0)^2}$$
$$D'(v) = d' e^{-k'(v-v'_0)^2} \qquad \cdots (a)$$

in a wavenumber region in proximity to the G band (i.e., 1500 cm$^{-1}$ $\leq v \leq$ 1630 cm$^{-1}$), and then

$$g, d', k, k', v_0, v'_0$$

in the preceding formulae (a) were optimized by the least-squares method such that the sum of the Gaussian functions

$$Sp(v) \approx G(v) + D'(v)$$

reproduced the original spectral function
$Sp(v)$.

A D' band was defined as "present" in a case in which calculation results converged and peak resolving was possible, whereas a D' band was defined as "absent" in a case in which calculation results did not converge. The G/D' ratio was also derived from the calculated parameters. Note that the meanings of parameters shown in the formulae (a) are as indicated in Table 1, shown below.

Table 1

| Parameter | Meaning |
|---|---|
| g | G band peak intensity |
| d' | D' band peak intensity |
| $v_0$ | G band peak wavenumber |
| $v'_0$ | D' band peak wavenumber |
| G/D' | Calculated by g/d' |

<Ratio of number of single-walled CNTs relative to total number of CNTs and ratio of number of oxidized single-walled CNTs relative to total number of oxidized CNTs>

CNTs and oxidized CNTs were both observed using a transmission electron microscope (TEM), and the number of walls was measured for 50 of the CNTs and 50 of the oxidized CNTs from obtained TEM images. A ratio of the number of single-walled CNTs relative to the 50 CNTs was taken to be the "ratio ($SGCNT_B$) of the number of single-walled CNTs relative to the total number of CNTs". Moreover, a ratio of the number of oxidized single-walled CNTs relative to the 50 oxidized CNTs was taken to be the "ratio ($SGCNT_A$) of the number of oxidized single-walled CNTs relative to the total number of oxidized CNTs".

<Average diameter of CNTs and oxidized CNTs>

CNTs and oxidized CNTs were both observed using a transmission electron microscope (TEM), and the diameters (external diameters) of 50 of the CNTs and 50 of the oxidized CNTs were measured from obtained TEM images. Arithmetic mean values of the diameters measured for the CNTs and the diameters measured for the oxidized CNTs were respectively taken to be the average diameter ($CNT_{DB}$) of the CNTs and the average diameter ($CNT_{DA}$) of the oxidized CNTs.

<Oxygen atom ratio of CNTs and oxidized CNTs>

CNTs and oxidized CNTs were both analyzed using an X-ray photoelectron spectroscopy analyzer (VG Theta Probe produced by Thermo Fisher Scientific). The area of a O1s peak and the area of all detected peaks were determined for both the CNTs and the oxidized CNTs, and then a ratio (at%) of the amount of oxygen atoms (O) relative to the amount of all constituent atoms of a surface was calculated (= amount of O atoms/amount of all atoms $\times$ 100) for both the CNTs and the oxidized CNTs, and the obtained value was taken to be the oxygen atom ratio (at%).

<Average length of CNTs and oxidized CNTs>

CNTs and oxidized CNTs were both observed using a scanning electron microscope (SEM), and the lengths of 50 of the CNTs and 50 of the oxidized CNTs were measured from obtained SEM images. Arithmetic mean values of the measured lengths of the CNTs and the measured lengths of the oxidized CNTs were respectively taken to be the average length of the CNTs and the average length of the oxidized CNTs.

<Single-walled ratio change rate>

The ratio ($SGCNT_B$) of single-walled CNTs relative to the total number of CNTs and the ratio ($SGCNT_A$) of oxidized single-walled CNTs relative to the total number of oxidized CNTs were used to determine a single-walled ratio change rate based on the following formula.

$$\text{Single-walled ratio change rate} = SGCNT_A/SGCNT_B \times 100(\%)$$

<Average diameter change rate>

The average diameter ($CNT_{DB}$) of CNTs and the average diameter ($CNT_{DA}$) of oxidized CNTs were used to determine an average diameter change rate based on the following formula.

$$\text{Average diameter change rate} = CNT_{DA}/CNT_{DB} \times 100(\%)$$

<Light absorbance ratio>

An oxidized CNT dispersion liquid produced in each example or comparative example was filtered and purified using a 0.2 $\mu$m syringe filter (produced by Pall Corporation; product name: Acrodisc Syringe Filter) to obtain a purified dispersion liquid. The purified dispersion liquid and an oxidized CNT dispersion liquid (non-purified dispersion liquid) in the same state as produced in each example or comparative example (i.e., without undergoing filtration/purification treatment) were each used to measure light absorbance with an optical path length of 1 mm and a wavelength of 550 nm using a spectrophotometer (produced by JASCO Corporation; product name: V670). A light absorbance ratio was then determined by the following formula. A larger light absorbance ratio means that the oxidized CNTs have higher dispersibility in water.

$$\text{Light absorbance ratio} = (\text{Light absorbance of purified dispersion liquid})/(\text{Light absorbance of non-purified dispersion liquid})$$

<Dispersion stability>

An oxidized CNT dispersion liquid produced in each example or comparative example was stored in the dark at room temperature for 1 month. A light absorbance ratio was determined for the oxidized CNT dispersion liquid after storage. Dispersion stability was judged to be "good" in a case in which reduction of the light absorbance ratio between before and after storage was less than 0.1, whereas dispersion stability was judged to be "poor" in a case in which reduction of the light absorbance ratio between before and after storage was 0.1 or more.

(Example 1)

<Preparation of used substrate>

Aluminum tri-sec-butoxide as an aluminum compound was dissolved in 2-propanol to produce a coating liquid A.
In addition, iron acetate as an iron compound was dissolved in 2-propanol to produce a coating liquid B.
The coating liquid A described above was applied onto the surface of an Fe-Cr alloy SUS430 base plate serving as a substrate by dip coating in an environment of room temperature (25°C) and 50% relative humidity. Specifically, the substrate was immersed in the coating liquid A, was subsequently held therein for 20 seconds, and was then pulled up with a pulling speed of 10 mm/s. Thereafter, air drying was performed for 5 minutes, heating was performed in a 300°C air environment for 30 minutes, and then cooling was performed to room temperature to form an alumina thin film (foundation layer) of 40 nm in thickness on the substrate.
Next, the coating liquid B described above was applied onto the alumina thin film on the substrate by dip coating in an environment of room temperature (25°C) and 50% relative humidity. Specifically, the substrate having the alumina thin film thereon was immersed in the coating liquid B, was subsequently held therein for 20 seconds, and was then pulled up with a pulling speed of 3 mm/s. Thereafter, air drying (drying temperature: 45°C) was performed for 5 minutes to form an iron thin film (catalyst layer) of 3 nm in thickness.

Next, CNTs were formed on the substrate using a CVD apparatus (reaction chamber size: 30 mm in diameter; 360 mm heating length). Specifically, the produced substrate was set inside a reaction chamber of the CVD apparatus that was held at a furnace internal temperature of 750°C and a furnace internal pressure of $1.02 \times 10^5$ Pa, and then 100 sccm of He and 900 sccm of $H_2$ were introduced into the reaction chamber for 6 minutes. Through the above, the catalyst for CNT synthesis (iron) was reduced and micronization was promoted so as to convert the catalyst for CNT synthesis to a state (state in which numerous catalyst fine particles of nanometer size were formed on the foundation layer) suitable for growth of single-walled CNTs (formation step). Note that the density of catalyst fine particles at this time was adjusted to $1 \times 10^{12}$ particles/cm$^2$ to $1 \times 10^{14}$ particles/cm$^2$. Thereafter, 850 sccm of He, 59 sccm of $C_2H_4$, and $H_2O$ in an amount such as to have a concentration of 300 ppm were supplied for 5 minutes into the reaction chamber having a state in which a furnace internal temperature of 750°C and a furnace internal pressure of $1.02 \times 10^5$ Pa were maintained. This caused growth of single-walled CNTs from the catalyst fine particles (CNT growth step).

Once the CNT growth step had ended, just 1,000 sccm of He was supplied into the reaction chamber in order to expel residual feedstock gas and catalyst activator. In this manner, a substrate having CNTs formed on the surface thereof was obtained.

The CNTs that had grown on the obtained substrate were subsequently peeled from the surface of the substrate. Specifically, a plastic spatula having a sharp section was used to peel off the CNTs. In this peeling, the sharp section of the spatula was applied at a boundary between the CNTs and the substrate and then the sharp section was moved along the plane of the substrate so as to scrape the CNTs from the substrate. In this manner, the CNTs were stripped from the substrate to obtain a used substrate.

[Production of reused substrate]

Next, the used substrate that was obtained was immersed in water and was washed for 5 minutes using an immersion-type ultrasonic washer 400G (power: 400 W; oscillation frequency: 38 kHz) produced by Kaijo Corporation to obtain a reused substrate (initialization step). Thereafter, the surface of the substrate that had undergone ultrasonic washing was water washed and then dried through blowing of air (cleaning step). When the contact angle with water of the surface of the substrate was measured before and after washing using an automatic contact angle meter DMs-601 produced by Kyowa Interface Science Co., Ltd., the contact angle with water after washing was 65° compared to 79° before washing, and thus it was confirmed that dirt on the substrate had been removed.

[Production of catalyst substrate for CNT production]

An alumina thin film (foundation layer) and an iron thin film (catalyst layer) were formed on the surface of the reused substrate by dip coating under the same conditions as previously described so as to produce a catalyst substrate for CNT production.

[Synthesis of CNTs]

The obtained catalyst substrate for CNT production was used to form CNTs on the substrate under the same conditions as previously described using the previously described CVD apparatus. The obtained CNTs were defined as CNTs (1).

In Raman spectroscopy of the CNTs (1), a radial breathing mode (RBM) spectrum was observed in a low frequency region of 100 cm$^{-1}$ to 300 cm$^{-1}$, which is characteristic of single-walled CNTs. Note that a D' band was not observed for the CNTs (1).

In addition, BET specific surface area, G/D ratio, ratio of number of single-walled CNTs relative to total number of CNTs, average diameter, oxygen atom ratio, and average length were determined for the CNTs (1). The results are shown in Table 2.

[Oxidation treatment]

A mixed liquid was obtained by adding 0.1 g of the CNTs (1) into 250 mL of nitric acid ($HNO_3$) aqueous solution having a concentration of 69 mass% (15.6 M). This mixed liquid was stirred at room temperature (approximately 25°C) for 8 hours. Next, using a heating mantle, the heater temperature was raised to 180°C so as to cause 6 hours of refluxing in a state in which the liquid temperature of the nitric acid aqueous solution was 123°C and perform oxidation treatment of the CNTs (1) contained in the mixed liquid to thereby yield a mixed liquid containing oxidized CNTs (1).

[Production of oxidized CNT dispersion liquid]

The mixed liquid containing the oxidized CNTs (1) was subsequently diluted through addition of 1,800 mL of deionized water. After 15 minutes of settling to cause sedimentation of the oxidized CNTs (1), the supernatant was removed. The liquid volume was subsequently adjusted to 1,800 mL through addition of deionized water. The obtained liquid was then adjusted to a pH of 7.1 through addition of 0.1% ammonia aqueous solution as a neutralizer. Two hours of ultrasonication was then performed using an ultrasonic irradiator to yield a dispersion liquid of the oxidized CNTs (1).
The obtained dispersion liquid of the oxidized CNTs (1) was used to calculate a light absorbance ratio and evaluate dispersion stability. The results are shown in Table 2.
The oxidized CNTs (1) in the dispersion liquid of the oxidized CNTs (1) were filtered off and dried. Determination of D' band, G/D' ratio, G/D ratio, ratio of number of oxidized single-walled CNTs relative to total number of oxidized CNTs, average diameter, oxygen atom ratio, and average length was performed for the oxidized CNTs (1) after drying. In addition, the single-walled ratio change rate and average diameter change rate were determined. The results are shown in Table 2.

(Example 2)

<Synthesis of CNTs using reused substrate>

[Synthesis of CNTs]

The reused substrate produced in Example 1 was used to repeat CNT growth by the same method as in Example 1 using the CVD apparatus so as to obtain CNTs (2).
In Raman spectroscopy of the CNTs (2), a radial breathing mode (RBM) spectrum was observed in a low frequency region of 100 $cm^{-1}$ to 300 $cm^{-1}$, which is characteristic of single-walled CNTs. Note that a D' band was not observed for the CNTs (2).
BET specific surface area, G/D ratio, ratio of number of single-walled CNTs relative to total number of CNTs, average diameter, oxygen atom ratio, and average length were determined for the CNTs (2). The results are shown in Table 2.

[Oxidation treatment]

A mixed liquid was obtained by adding 0.1 g of the CNTs (2) into 250 mL of nitric acid ($HNO_3$) aqueous solution having a concentration of 55 mass% (12.0 M). This mixed liquid was stirred at room temperature (approximately 25°C) for 8 hours. Next, using a heating mantle, the heater temperature was raised to 180°C so as to cause 12 hours of refluxing in a state in which the liquid temperature of the nitric acid aqueous solution was 117°C and perform oxidation treatment of the CNTs (2) contained in the mixed liquid to thereby yield a mixed liquid containing oxidized CNTs (2).

[Production of oxidized CNT dispersion liquid]

The mixed liquid containing the oxidized CNTs (2) that was obtained was then subjected to the same operations as in Example 1 to yield a dispersion liquid of the oxidized CNTs (2).
The obtained dispersion liquid of the oxidized CNTs (2) was used to perform various measurements and evaluations in the same way as in Example 1. The results are shown in Table 2.

(Comparative Example 1)

<Synthesis of CNTs using virgin substrate>

[Synthesis of CNTs]

Synthesis of CNTs was performed in accordance with the super growth method described in JP4621896B2 under the following conditions to synthesize CNTs (3).

Carbon compound used as feedstock compound: Ethylene
Atmosphere (carrier gas): Helium/hydrogen mixed gas
Catalyst activating material: Water vapor
Catalyst layer: Alumina thin film (foundation layer) and iron thin film (catalyst layer)

Virgin substrate: SUS430

In Raman spectroscopy of the CNTs (3), a radial breathing mode (RBM) spectrum was observed in a low frequency region of 100 cm$^{-1}$ to 300 cm$^{-1}$, which is characteristic of single-walled CNTs. Note that a D' band was not observed for the CNTs (3).
BET specific surface area, G/D ratio, ratio of number of single-walled CNTs relative to total number of CNTs, average diameter, oxygen atom ratio, and average length were determined for the CNTs (3). The results are shown in Table 2.

[Oxidation treatment]

A mixed liquid was obtained by adding 0.1 g of the CNTs (3) into 250 mL of nitric acid (HNO$_3$) aqueous solution having a concentration of 39 mass% (7.7 M). This mixed liquid was stirred at room temperature (approximately 25°C) for 8 hours. Next, using a heating mantle, the heater temperature was raised to 125°C so as to cause 6 hours of refluxing in a state in which the liquid temperature of the nitric acid aqueous solution was 100°C and perform oxidation treatment of the CNTs (3) contained in the mixed liquid to thereby yield a mixed liquid containing oxidized CNTs (3).

[Production of oxidized CNT dispersion liquid]

The mixed liquid containing the oxidized CNTs (3) that was obtained was then subjected to the same operations as in Example 1 to yield a dispersion liquid of the oxidized CNTs (3).
The obtained dispersion liquid of the oxidized CNTs (3) was used to perform various measurements and evaluations in the same way as in Example 1. The results are shown in Table 2.

(Comparative Example 2)

A dispersion liquid of oxidized CNTs (4) was obtained by performing the same operations as in Comparative Example 1 with the exception that CNTs (4) (EC2.0P produced by Meijo Nano Carbon) that had been synthesized in accordance with the eDIPS method were used instead of the CNTs (3). The obtained dispersion liquid of the oxidized CNTs (4) was used to perform various measurements and evaluations in the same way as in Comparative Example 1. The results are shown in Table 2.

Table 2

| | | Example 1 | Example 2 | Comparative Example 1 | Comparative Example 2 |
|---|---|---|---|---|---|
| CNTs | Type of substrate used in CNT synthesis | Reused substrate | Reused substrate | Virgin substrate | - |
| | D' band | No | No | No | No |
| | G/D ratio [-] | 4.3 | 3.8 | 2.8 | 48 |
| | BET specific surface area [m$^2$/g] | 1530 | 1310 | 1200 | 480 |
| | Ratio of number of single-walled CNTs relative to total number of CNTs [%] | 94 | 84 | 90 | 70 |
| | Average diameter [nm] | 2.8 | 3.1 | 3.1 | 2.2 |
| | Oxygen atom ratio [at%] | 1.5 | 1.6 | 2.3 | 3.2 |
| | Average length [μm] | 360 | 410 | 640 | 2200 |
| Oxidation treatment | Nitric acid concentration [mass%] | 69 | 55 | 39 | 39 |
| | Reaction temperature [°C] | 123 | 117 | 100 | 100 |
| | Reaction time [hr] | 6 | 12 | 6 | 6 |

(continued)

|  | | | Example 1 | Example 2 | Comparative Example 1 | Comparative Example 2 |
|---|---|---|---|---|---|---|
| Oxidized CNTs | | D' band | Yes | Yes | No | No |
| | | G/D' ratio [-] | 1.3 | 1.6 | - | - |
| | | G/D ratio [-] | 0.8 | 0.7 | 0.6 | 41 |
| | | Ratio of number of oxidized single-walled CNTs relative to total number of oxidized CNTs [%] | 65 | 75 | 85 | 70 |
| | | Average diameter [nm] | 3.7 | 3.6 | 3.1 | 2.2 |
| | | Oxygen atom ratio [at%] | 16 | 16 | 14 | 4 |
| | | Average length [nm] | 50 | 80 | 150 | 900 |
| Single-walled ratio change rate [%] | | | 69 | 89 | 94 | 100 |
| Average diameter change rate [%] | | | 132 | 116 | 100 | 100 |
| Light absorbance ratio | | | 0.9 | 0.88 | 0.8 | 0.2 |
| Dispersion stability | | | Good | Good | Poor | Poor |

It can be seen from Table 2 that oxidized CNTs having excellent dispersion stability and dispersibility in water are obtained in Examples 1 and 2 in which CNTs having specific properties are used.
In contrast, it can be seen that oxidized CNTs having excellent dispersion stability and dispersibility in water are not obtained in Comparative Examples 1 and 2 in which CNTs that do not have the specific properties are used.

INDUSTRIAL APPLICABILITY

According to the present disclosure, it is possible to provide oxidized CNTs having excellent dispersion stability and dispersibility in water and a method of producing these oxidized CNTs.

**Claims**

1. Oxidized carbon nanotubes comprising oxidized single-walled carbon nanotubes, wherein

   a ratio of a number of the oxidized single-walled carbon nanotubes relative to a total number of the oxidized carbon nanotubes is more than 50%, and
   the oxidized carbon nanotubes have a D' band in a Raman spectrum.

2. The oxidized carbon nanotubes according to claim 1, wherein the oxidized carbon nanotubes have an average diameter of not less than 3.5 nm and not more than 5 nm.

3. The oxidized carbon nanotubes according to claim 1 or 2, wherein the oxidized carbon nanotubes have an oxygen atom ratio of 15 at% or more.

4. The oxidized carbon nanotubes according to any one of claims 1 to 3, wherein the oxidized carbon nanotubes have an average length of not less than 30 nm and not more than 120 nm.

5. A method of producing oxidized carbon nanotubes that is a method of producing the oxidized carbon nanotubes according to any one of claims 1 to 4, comprising an oxidation treatment step of performing oxidation treatment of carbon nanotubes including single-walled carbon nanotubes, wherein the carbon nanotubes have a BET specific surface area of more than 1,300 $m^2/g$.

**6.** The method of producing oxidized carbon nanotubes according to claim 5, wherein the carbon nanotubes have a G/D ratio of more than 3.0 and less than 10.

**7.** The method of producing oxidized carbon nanotubes according to claim 5 or 6, wherein the oxidation treatment is performed using nitric acid aqueous solution having a concentration of higher than 40 mass% in the oxidation treatment step.

**8.** The method of producing oxidized carbon nanotubes according to claim 7, wherein a mixture containing the carbon nanotubes and the nitric acid aqueous solution is refluxed at a temperature that is $\pm$ 5°C relative to an azeotropic point of the nitric acid aqueous solution in the oxidation treatment step.

**9.** The method of producing oxidized carbon nanotubes according to any one of claims 5 to 8, wherein the oxidation treatment of the carbon nanotubes in the oxidation treatment step is performed such that a single-walled ratio change rate expressed by formula (1), shown below:
single-walled ratio change rate = $SGCNT_A/SGCNT_B \times 100(\%)$ ... (1) is 90% or less, given that in formula (1), $SGCNT_A$ represents a ratio of a number of the oxidized single-walled carbon nanotubes relative to a total number of the oxidized carbon nanotubes and $SGCNT_B$ represents a ratio of a number of the single-walled carbon nanotubes relative to a total number of the carbon nanotubes.

**10.** The method of producing oxidized carbon nanotubes according to any one of claims 5 to 9, wherein the oxidation treatment of the carbon nanotubes in the oxidation treatment step is performed such that an average diameter change rate expressed by formula (2), shown below:
average diameter change rate = $CNT_{DA}/CNT_{DB} \times 100(\%)$ $\cdots$ (2) is more than 100%, given that in formula (2), $CNT_{DA}$ represents average diameter of the oxidized carbon nanotubes and $CNT_{DB}$ represents average diameter of the carbon nanotubes.

## INTERNATIONAL SEARCH REPORT

| International application No. |
|---|
| **PCT/JP2021/028162** |

**A.    CLASSIFICATION OF SUBJECT MATTER**

*C01B 32/174*(2017.01)i; *B01J 23/745*(2006.01)i; *B82Y 30/00*(2011.01)i; *B82Y 40/00*(2011.01)i; *C01B 32/159*(2017.01)i
FI:    C01B32/174; C01B32/159; B01J23/745 M; B82Y30/00; B82Y40/00

According to International Patent Classification (IPC) or to both national classification and IPC

**B.    FIELDS SEARCHED**

Minimum documentation searched (classification system followed by classification symbols)

C01B32/174; B01J23/745; B82Y30/00; B82Y40/00; C01B32/159

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2015/045418 A1 (ZEON CORP) 02 April 2015 (2015-04-02) claims, paragraphs [0004], [0012], [0032]-[0037], [0077]-[0078], [0082]-[0083], [0091], [0093] | 1-8 |
| A | | 9-10 |
| X | WO 2017/115708 A1 (ZEON CORP) 06 July 2017 (2017-07-06) paragraphs [0017], [0029], [0046], [0085]-[0086] | 1-8 |
| A | | 9-10 |
| A | JP 2005-263607 A (UNIV SHINSHU) 29 September 2005 (2005-09-29) paragraphs [0008]-[0012], [0034]-[0045], fig. 2A-2D, 3 | 1-10 |
| A | WO 2018/168346 A1 (ZEON CORP) 20 September 2018 (2018-09-20) entire text | 1-10 |
| A | JP 2015-146227 A (NIPPON ZEON CO) 13 August 2015 (2015-08-13) entire text | 1-10 |

☑ Further documents are listed in the continuation of Box C.          ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **14 September 2021** | **28 September 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/028162**

C.      DOCUMENTS CONSIDERED TO BE RELEVANT

| Category* | Citation of document, with indication, where appropriate, of the relevant passages | Relevant to claim No. |
|---|---|---|
| A | JP 2003-81616 A (HONDA MOTOR CO LTD) 19 March 2003 (2003-03-19)<br>entire text | 1-10 |
| A | JP 2015-17029 A (TORAY INDUSTRIES) 29 January 2015 (2015-01-29)<br>entire text | 1-10 |
| A | WO 2019/097698 A1 (SHIMADZU CORP) 23 May 2019 (2019-05-23)<br>entire text | 1-10 |
| A | JP 2018-131348 A (TOYO INK SC HOLDINGS CO LTD) 23 August 2018 (2018-08-23)<br>entire text | 1-10 |

Form PCT/ISA/210 (second sheet) (January 2015)

INTERNATIONAL SEARCH REPORT
Information on patent family members

International application No.

**PCT/JP2021/028162**

| Patent document cited in search report | | | Publication date (day/month/year) | Patent family member(s) | | | Publication date (day/month/year) |
|---|---|---|---|---|---|---|---|
| WO | 2015/045418 | A1 | 02 April 2015 | US claims, examples 3, 4, 7, tables 2, 4 | 2016-0229695 | A1 | |
| | | | | CN | 105555708 | A | |
| | | | | KR | 10-2016-0060042 | A | |
| WO | 2017/115708 | A1 | 06 July 2017 | US paragraphs [0017], [0029], [0046], example 1 | 2019-0161628 | A1 | |
| | | | | CN | 108367925 | A | |
| | | | | KR | 10-2018-0099671 | A | |
| JP | 2005-263607 | A | 29 September 2005 | (Family: none) | | | |
| WO | 2018/168346 | A1 | 20 September 2018 | US entire text | 2019-0367370 | A1 | |
| | | | | CN | 110366536 | A | |
| | | | | KR | 10-2019-0127709 | A | |
| JP | 2015-146227 | A | 13 August 2015 | (Family: none) | | | |
| JP | 2003-81616 | A | 19 March 2003 | US entire text | 2003-0007924 | A1 | |
| JP | 2015-17029 | A | 29 January 2015 | US entire text | 2015-0318069 | A1 | |
| | | | | EP entire text | 002962990 | A1 | |
| | | | | CN | 105008276 | A | |
| | | | | KR | 10-2015-0122134 | A | |
| WO | 2019/097698 | A1 | 23 May 2019 | US entire text | 2020-0384127 | A1 | |
| | | | | CN | 111356481 | A | |
| JP | 2018-131348 | A | 23 August 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018180901 A1
- WO 2006011655 A1
- JP 2015188811 A
- JP 4621896 B